# EUROPÄISCHE PATENTANMELDUNG

(11) **EP 1 037 488 A2**
(43) Veröffentlichungstag der Anmeldung: **20.09.2000**
(21) Anmeldenummer: 00105606.8
(22) Anmeldetag: 16.03.2000
(51) Int. Cl.: H04Q 7/38

(54) **Verfahren und Funkkommunikationsnetz zur Steuerung eines Verbindungsaufbaus**

(30) Priorität: 18.03.1999 DE 19912195
(71) Anmelder: SIEMENS AKTIENGESELLSCHAFT, 80333 München (DE)
(72) Erfinder: Stynen, Jan, 2970 Schilde (BE)

(57) **Zusammenfassung**

Ausgehend davon, dass bei Nichterreichbarkeit des angerufenen Funkteilnehmers (BP) eine Nachricht (MESS) von einer Aufzeichnungseinrichtung (VMS) gespeichert wird und eine Meldung (NOTI) über das Vorliegen der Nachricht (MESS) an das mobile Endgerät gesendet wird, werden gemäß dem Gegenstand der Erfindung zusammen mit der Nachricht (MESS) eine Rufnummer (APN) des anrufenden Teilnehmers von der Aufzeichnungseinrichtung (VMS) gespeichert sowie bei einer Anforderung der Nachricht (MESS) durch den Funkteilnehmer (BP), von dem ein Verbindungsaufbau zur Aufzeichnungseinrichtung (VMS) initiiert und die gespeicherte Nachricht (MESS) über das mobile Endgerät empfangen wird, automatisch eine Verbindung zu dem Endgerät des anrufenden Teilnehmers (AP) von der Aufzeichnungseinrichtung (VMS) initiiert und netzseitig anhand der gespeicherten Rufnummer (APN) aufgebaut. Dadurch, dass eine Verbindung automatisch bei Abruf der für den vergeblich angerufenen Funkteilnehmer gespeicherten Nachricht von der Aufzeichnungseinrichtung initiiert und anhand der gespeicherten Rufnummer des anrufenden Teilnehmers aufgebaut wird, braucht der Funkteilnehmer einerseits sich nicht die Rufnummer des Anrufers 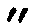 off-line" zu notieren und andererseits einen weiteren Verbindungsaufbau zu dem nun bekannten Anrufziel nicht selbst zu starten.

## Beschreibung

Die Erfindung betrifft ein Verfahren zur Steuerung eines Verbindungsaufbaus gemäß dem Oberbegriff des Patentanspruchs 1 sowie ein Funkkommunikationsnetz gemäß dem Oberbegriff des Patentanspruchs 7.

Es ist allgemein bekannt, dass eine Kommunikationsverbindung von einem anrufenden Endgerät - beispielsweise eines Funkteilnehmers oder eines anderen Teilnehmers - zu einem mobilen Endgerät eines Funkteilnehmers eines Funkkommunikationsnetzes initiiert werden kann. Für den Fall der Nichterreichbarkeit des Funkteilnehmers (B-Teilnehmer) wird üblicherweise eine Nachricht des anrufenden Teilnehmers (A-Teilnehmer) von einer Aufzeichnungseinrichtung - beispielsweise einer 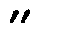 voice Mail Box" - gespeichert sowie eine Meldung über das Vorliegen der Nachricht an das mobile Endgerät des vergeblich angerufenen Funkteilnehmers gesendet. An der von seinem mobilen Endgerät empfangenen Meldung erkennt der Funkteilnehmer, dass eine Nachricht für ihn vorliegt, und kann daraufhin die in der Aufzeichnungseinrichtung hinterlegte Nachricht durch In-itiierung eines Verbindungsaufbaus abrufen. Üblicherweise gibt der anrufende Teilnehmer seine Rufnummer bekannt, unter der dieser erreichbar ist. Der Funkteilnehmer notiert sich 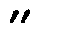 off-line" diese Rufnummer und muss nach Beenden - d.h. Auslösen - der Verbindung mit der Aufzeichnungseinrichtung einen weiteren Verbindungsaufbau zu dem nun bekannten Anrufziel des A-Teilnehmers neu starten.

Aufgabe der vorliegenden Erfindung ist es, ein Verfahren und ein Funkkommunikationsnetz anzugeben, durch das der Verbindungsaufbau zu dem Anrufziel des anrufenden Teilnehmers bei Nichterreichbarkeit des angerufenen Funkteilnehmers verbesser werden kann.

Diese Aufgabe wird gemäß der Erfindung durch die Merkmale des Patentanspruchs 1 hinsichtlich des Verfahrens und durch die Merkmale des Patentanspruchs 7 hinsichtlich des Funkkommunikationsnetzes gelöst.

Ausgehend davon, dass bei Nichterreichbarkeit des angerufenen Funkteilnehmers eine Nachricht von einer Aufzeichnungseinrichtung gespeichert wird und eine Meldung über das Vorliegen der Nachricht an das mobile Endgerät gesendet wird, werden gemäß dem Gegenstand der Erfindung zusammen mit der Nachricht eine Rufnummer des anrufenden Teilnehmers von der Aufzeichnungseinrichtung gespeichert sowie bei einer Anforderung der Nachricht durch den Funkteilnehmer, von dem ein Verbindungsaufbau zur Aufzeichnungseinrichtung initiiert und die gespeicherte Nachricht über das mobile Endgerät empfangen wird, automatisch eine Verbindung zu dem Endgerät des anrufenden Teilnehmers von der Aufzeichnungseinrichtung initiiert und netzseitig anhand der gespeicherten Rufnummer aufgebaut.

Dadurch, dass eine Verbindung automatisch bei Abruf der für den vergeblich angerufenen Funkteilnehmer gespeicherten Nachricht von der Aufzeichnungseinrichtung initiiert und anhand der gespeicherten Rufnummer des anrufenden Teilnehmers aufgebaut wird, braucht der Funkteilnehmer einerseits sich nicht die Rufnummer des Anrufers 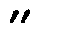 off-line" zu notieren und andererseits einen weiteren Verbindungsaufbau zu dem nun bekannten Anrufziel nicht selbst zu starten. Darüber hinaus entstehen dem Funkteilnehmer durch Initiierung einer einzigen Verbindung zunächst zur Aufzeichnungseinrichtung und von dort automatisch zum anrufenden Teilnehmer geringere Gebühren als bei zwei jeweils vom Funkteilnehmer voneinander getrennt zu startenden Verbindungen.

Als günstig hat sich gemäß einer Weiterbildung der Erfindung erwiesen, dass von der Aufzeichnungseinrichtung der automatische Verbindungsaufbau zum Endgerät des anrufenden Teilnehmers abhängig von der Länge der gespeicherten Nachricht gestartet wird. Damit erfolgt der Beginn des automatischen Verbindungsaufbaus in flexibler Art und Weise je nach Nachrichtenlänge, im Extremfall sehr schnell für den Fall, dass nur die Rufnummer des anrufenden Teilnehmers aufgezeichnet wurde, oder erst relativ spät für den Fall, dass eine umfangreiche Information vorliegt, die zunächst abgehört wird.

Gemäß einer Variante der Erfindung wird von der Aufzeichnungseinrichtung der automatische Verbindungsaufbau zum Endgerät des anrufenden Teilnehmers nach dem Senden der gespeicherten Nachricht gestartet. Damit ist sichergestellt, dass der Start des Verbindungsaufbaus immer unmittelbar bei Aussenden der gespeicherten Nachricht ausgeführt wird.

Die Erfindung wird anhand eines in einer Figur dargestellten Ausführungsbeispiels näher erläutert, die den Nachrichtenfluß zum Verbindungsaufbau zwischen anrufendem Teilnehmer und angerufenem Funkteilnehmer zeigt.

Im vorliegenden Ausführungsbeispiel sei angenommen, dass eine Kommunikationsverbindung zwischen einem anrufenden Teilnehmer AP (A-Party) über ein Endgerät eines leitungsgebundenen Kommunikationsnetzes PSTN und einem angerufenen Funkteilnehmer BP (B-Party) aufgebaut und gesteuert werden soll. Somit handelt es sich aus Sicht des Funkteilnehmers BP um eine ankommende Verbindung (Mobile Terminated Call). Ein Funkteilnehmer nutzt bekanntlich eine Mobilstation als Endgerät zur Kommunikation mit anderen Teilnehmern eines Kommunikationsnetzes. Über eine Funkschnittstelle des vorzugsweise zellular aufgebauten Funkkommunikationsnetzes PLMN werden Informationen zwischen der Mobilstation und den Netzeinrichtungen in beiden Übertragungsrichtungen (downlink, uplink) ausgetauscht. Das Funkkommunikationsnetz kann beispielsweise ein heutiges GSM-Netz (Global System for Mobile Communication), aber auch ein zukünftiges UMTS-Netz (Universal Mobile Telecommunication System) oder ein sonstiges Netz sein.

Über eine Netzschnittstelle des Funkkommunikationsnetzes PLMN können vom Kommunikationsnetz PSTN - d.h. vom Endgerät des Anrufers AP - ankommende oder in das Kommunikationsnetz PSTN abgehende Verbindungen behandelt werden. Das Funkkommunikationsnetz PLMN gliedert sich üblicherweise in ein an der Funk-schnittstelle angeordnetes Funkteilsystem BSS (Base Station Subsystem) mit jeweils mindestens eine Funkzelle bedienenden Basisstationen - an die Basisstationssteuerungen angeschlossen sind - und ein mit dem Funkteilsystem verbundenes Vermittlungsteilsystem mit Teilnehmerdatenbasen - den Besucher-registern VLR (Visitor Location Register) und zumindest einem Heimatregister HLR (Home Location Register) - sowie mit jeweils einer Teilnehmerdatenbasis VLR zugeordneten Vermittlungsstellen MSC (Mobile Switching Center) und GMSC (Gateway Mobile Switching Center). Die Vermittlungsstelle GMSC dient dabei als Schnittstelleneinrichtung zum Empfang der von anderen Netzen ankommenden Verbindungen bzw. zum Senden der zu anderen Netzen abgehenden Verbindungen.

Der Verbindungsaufbau wird durch Erzeugen und Aussenden einer Nachricht IAM durch das Endgerät des Teilnehmers AP initiiert (1). Die Nachricht IAM enthält u.a. die Rufnummer BPN des angerufenen Funkteilnehmers BP, bestehend aus der Funkteilneh-merrufnummer MSISDN (Mobile Subscriber ISDN Number). Die Vermittlungsstelle GMSC ermittelt aus der empfangenen Information MSISDN das für den Funkteilnehmer BP geeignete Heimatregister HLR und baut dorthin eine Zeichengabeprozedur mittels der Nachricht SIGN auf. Das Heimatregister HLR sendet eine Anforderungsnachricht PRN an das Besucherregister VLR aus, in dessen Aufenthaltsbereich sich der angerufene Funkteilnehmer BP in diesem Augenblick bewegt. Das Besucherregister VLR sendet die angeforderte Aufenthaltsrufnummer MSRN zum Heimatregister HLR zurück, das diese Nummer an die Vermittlungsstelle GMSC weiterleitet. Anhand der empfangenen Aufenthaltsrufnummer MSRN baut die Vermittlungsstelle eine Verbindung ROUTE zu der für den Funkteilnehmer BP zuständigen Vermittlungsstelle auf, die daraufhin die zum Funkteilnehmer BP gehörigen Teilnehmerdaten vom zugeordneten Besucherregister VLR anfordert. Die zum Aufenthaltsbereich gehörigen Basisstationen des Basisstationssystems BSS senden eine Funkrufnachricht PAGE in ihre Funkzellen.

Das mobile Endgerät des angerufenen Funkteilnehmers BP reagiert auf den Empfang der Funkrufnachricht mit der Übertragung einer Information NRC über die Nichterreichbarkeit des Funkteilnehmers BP in der Aufwärtsübertragungsrichtung (up-link) zum Funkkommunikationsnetz PLMN. Über die Netzeinrichtungen wird diese Information NRC zum Endgerät des anrufenden Teilnehmers AP in Form beispielsweise einer Ansage weiter-übertragen, die dem anrufenden Teilnehmer AP die Möglichkeit der Speicherung einer Nachricht für den angerufenen Funkteilnehmer BP in einer Aufzeichnungseinrichtung VMS (Voice Mail System) enthält.

Daraufhin spricht der A-Teilnehmer AP eine Nachricht MESS vorzugsweise mit einer Rufnummer APN zur Definition eines Anrufziels, unter dem er erreichbar ist - vorzugsweise seiner eigenen Rufnummer - in sein Endgerät, das diese Informationen zu den mit der Aufzeichnungseinrichtung VMS verbundenen Netzeinrichtungen aussendet (2). Die Aufzeichnungseinrichtung VMS verfügt über Speichermittel SP zur Speicherung der Nachricht MESS und der Rufnummer APN. Eine Meldung NOTI über das Vorliegen der Nachricht MESS wird von der Aufzeichnungseinrichtung VMS bzw. von Steuermitteln ST der Aufzeichnungseinrichtung VMS an das mobile Endgerät des Funkteilnehmers BP gesendet. Die Aufzeichnungseinrichtung VMS kann entweder als funk-kommunikationsnetzinterne Einrichtung oder als funkkommunikationsnetzexterne Einrichtung zusätzlich zu den anderen Netzeinrichtungen, von denen mindestens eine Einrichtung mit der Aufzeichnungseinrichtung VMS in Verbindung steht, angeordnet sein.

Der Funkteilnehmer BP erkannt an der empfangenen Meldung NOTI das Vorhandensein einer Nachricht MESS und initiiert daher einen Verbindungsaufbau durch Erzeugen und Aussenden einer Nachricht IAM mit der für die Aufzeichnungseinrichtung VMS vorgesehenen Rufnummer VMSN durch sein mobiles Endgerät (3) Als Folge dieses Verbindungsaufbaus wird die Nachricht MESS von den Steuermitteln ST aus den Speichermitteln SP ausgelesen und an das mobile Endgerät des Funkteilnehmers BP übertragen. Sobald eine Anforderung der Nachricht MESS durch den Funkteilnehmer BP in der Aufzeichnungseinrichtung VMS eintrifft, wird automatisch eine Verbindung zu dem Endgerät des anrufenden Teilnehmers AP von den Steuermitteln ST der Aufzeichnungseinrichtung VMS initiiert und netzseitig durch die entsprechenden Netzeinrichtungen anhand der das Anrufziel des A-Teilnehmers AP kennzeichnenden gespeicherten Rufnummer APN aufgebaut. Dadurch, dass eine Verbindung automatisch bei Ab-ruf der für den vergeblich angerufenen Funkteilnehmer BP gespeicherten Nachricht MESS von der Aufzeichnungseinrichtung VMS initiiert und anhand der gespeicherten Rufnummer APN des anrufenden Teilnehmers AP aufgebaut wird, braucht der Funkteilnehmer BP einerseits sich nicht die Rufnummer APN des Anrufers 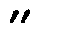 off-line" zu notieren und andererseits einen weiteren Verbindungsaufbau zu dem nun bekannten Anrufziel nicht selbst zu starten. Darüber hinaus entstehen dem Funkteilnehmer BP durch Initiierung einer einzigen Verbindung zunächst zur Aufzeichnungseinrichtung VMS und von dort automatisch zum anrufenden Teilnehmer AP geringere Gebühren als bei zwei jeweils vom Funkteilnehmer BP voneinander getrennt zu startenden Verbindungen.

Als günstig hat sich erwiesen, dass von den Steuermitteln ST der Aufzeichnungseinrichtung VMS der automatische Verbindungsaufbau zum Endgerät des anrufenden Teilnehmers AP abhängig von der Länge der gespeicherten Nachricht MESS gestartet wird. Damit erfolgt der Beginn des automatischen Verbindungsaufbaus in flexibler Art und Weise je nach Nachrichtenlänge, im Extremfall sehr schnell für den Fall, dass nur die Rufnummer APN des anrufenden Teilnehmers AP und nicht zusätzliche Mitteilungen aufgezeichnet wurden, oder erst relativ spät für den Fall, dass eine umfangreiche Information vorliegt, deren Abhören eine gewisse Zeitdauer braucht. Nach einer Variante der Erfindung wird von den Steuermitteln ST der Aufzeichnungseinrichtung VMS der automatische Verbindungsaufbau zum Endgerät des anrufenden Teilnehmers AP grundsätzlich immer nach dem Aussenden der gespeicherten Nachricht MESS gestartet. Damit ist sichergestellt, dass der automatische Start des Verbindungsaufbaus von der Aufzeichnungseinrichtung VMS zum Endgerät des Teilnehmers AP immer unmittelbar bei Aussenden der gespeicherten Nachricht MESS zum mobilen Endgerät des Funkteilnehmers ausgeführt wird.

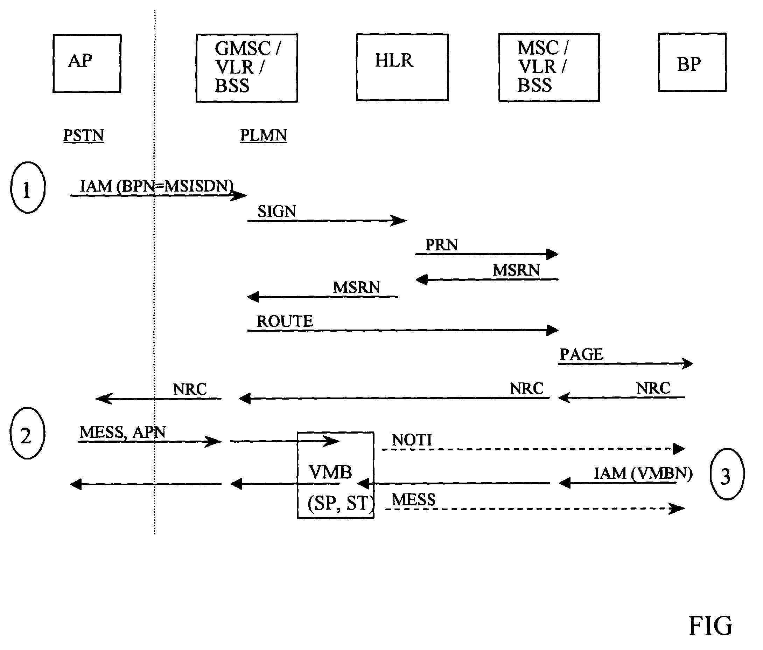

## Patentansprüche

1. Verfahren zur Steuerung eines Verbindungsaufbaus, bei dem eine Kommunikationsverbindung von einem anrufenden Endgerät (AP) zu einem mobilen Endgerät eines Funkteilnehmers (BP) eines Funkkommunikationsnetzes (PLMN) initiiert wird und bei Nichterreichbarkeit des Funkteilnehmers (BP) eine Nachricht (MESS) von einer Aufzeichnungseinrichtung (VMS) gespeichert wird, und bei dem eine Meldung (NOTI) über das Vorliegen der Nachricht (MESS) an das mobile Endgerät gesendet wird,
**dadurch gekennzeichnet**,
- dass zusammen mit der Nachricht (MESS) eine Rufnummer des anrufenden Teilnehmers von der Aufzeichnungseinrichtung (VMS) gespeichert wird, und
- dass bei einer Anforderung der Nachricht (MESS) durch den Funkteilnehmer (BP), von dem ein Verbindungsaufbau zur Aufzeichnungseinrichtung (VMS) initiiert und die gespeicherte Nachricht (MESS) über das mobile Endgerät empfangen wird, automatisch eine Verbindung zu dem Endgerät des anrufenden Teilnehmers (AP) von der Aufzeichnungseinrichtung (VHS) initiiert und netzseitig anhand der gespeicherten Rufnummer aufgebaut wird.

2. Verfahren nach Anspruch 1,
**dadurch gekennzeichnet**,
dass von der Aufzeichnungseinrichtung (VMS) der automatische Verbindungsaufbau zum Endgerät des anrufenden Teilnehmers abhängig von der Länge der gespeicherten Nachricht (MESS) gestartet wird.

3. Verfahren nach Anspruch 1,
**dadurch gekennzeichnet**,
dass von der Aufzeichnungseinrichtung (VMS) der automatische Verbindungsaufbau zum Endgerät des anrufenden Teilnehmers nach dem Senden der gespeicherten Nachricht (MESS) gestartet wird.

4. Verfahren nach einem der vorhergehenden Ansprüche,
**dadurch gekennzeichnet**,
dass die Rufnummer des anrufenden Teilnehmers bis zu der Aufzeichnungseinrichtung (VMS) signalisiert und automatisch gespeichert wird.

5. Verfahren nach einem der vorhergehenden Ansprüche,
**dadurch gekennzeichnet**,
dass als Aufzeichnungseinrichtung (VMS) eine funkkommunikationsnetzexterne Einrichtung eingesetzt wird.

6. Verfahren nach einem der vorhergehenden Ansprüche,
**dadurch gekennzeichnet**,
dass als Aufzeichnungseinrichtung (VMS) eine funkkommunikationsnetzinterne Einrichtung eingesetzt wird.

7. Funkkommunikationsnetz (PLMN) zur Steuerung eines Verbindungsaufbaus, bei dem eine Kommunikationsverbindung von einem anrufenden Endgerät (AP) zu einem mobilen Endgerät eines Funkteilnehmers (BP) initiiert wird und bei Nichterreichbarkeit des Funkteilnehmers (BP) eine Nachricht (MESS) von einer Aufzeichnungseinrichtung (VMS) gespeichert wird, und bei dem eine Meldung (NOTI) über das Vorliegen der Nachricht (MESS) an das mobile Endgerät gesendet wird,
**dadurch gekennzeichnet**,
- dass die Aufzeichnungseinrichtung (VMS) Mittel aufweist, die eine Rufnummer des anrufenden Teilnehmers zusammen mit der Nachricht (MESS) speichern,
- dass die Aufzeichnungseinrichtung (VMS) Mittel aufweist, die bei einer Anforderung der Nachricht (MESS) durch den Funkteilnehmer (BP), von dem ein Verbindungsaufbau zur Aufzeichnungseinrichtung (VMS) initiiert und die gespeicherte Nachricht (MESS) über das mobile Endgerät empfangen wird, automatisch eine Verbindung zu dem Endgerät des anrufenden Teilnehmers (AP) initiieren, und
- dass das Funkkommunikationsnetz (PLMN) Mittel zum Aufbau der Verbindung zu dem Endgerät des anrufenden Teilnehmers (AP) anhand der gespeicherten Rufnummer aufweist.
